(19) 

**Europäisches Patentamt**

**European Patent Office**

**Office européen des brevets**

(11)  **EP 1 720 371 A2**

(12)  **EUROPEAN PATENT APPLICATION**

(43) Date of publication:
**08.11.2006  Bulletin 2006/45**

(21) Application number: **06009078.4**

(22) Date of filing: **02.05.2006**

(51) Int Cl.:
*H04Q 7/38* *(2006.01)*       *H04L 12/56* *(2006.01)*

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority:  **03.05.2005  KR 20050037176**

(71) Applicant: **Samsung Electronics Co., Ltd.**
**Yeongtong-gu**
**Suwon-si, Gyeonggi-do (KR)**

(72) Inventor: **Choi, Yoon-Suk,**
**c/o Samsung Elec. Co., Ltd.**
**Suwon-si,**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54)  **Cell reselection method based on quality of service in a mobile communication terminal**

(57)      Disclosed is a cell selection method for providing better quality of service. For this purpose, when measurement values (for example, a receive level) from adjacent cells near a mobile station (MS) are similar to each other, the MS measures quality of a packet data traffic channel (PDTCH) through which data are transmitted. Then, based on the measured quality, the MS selects or reselects a new cell which can provide better QoS. Even when the receive levels of the adjacent cells near the MS are similar to each other, the MS can perform camping to the new cell which is capable of providing the best QoS so that the user of the MS may receive better QoS.

PACKET DATA SERVICE MODE ── 600

↓

CHECK PDTCH QUALITY ── 610

↓

CONFIRM EACH PARAMETER VALUE
TRANSMITTED AND RECEIVED ── 620

↓

DETERMINE IF PERFORMING CELL
RESELECTION BASED ON THE
PARAMETERS ── 630

↓

END

FIG.6

EP 1 720 371 A2

**Description**

The present invention relates to a mobile communication system, and more particularly to a cell reselection method based on quality of service (QoS)in a mobile communication terminal or mobile station.

Generally, when a power source of a conventional mobile communication terminal is turned on, the mobile communication terminal searches for cells of a public land mobile network (PLMN), properly selects one of the cells, adjusts channels to the selected cell, and finally connects itself to the PLMN. In other words, as long as the power source of the mobile terminal remains turned on, cell selection and cell reselection are continuously performed. When moving between cells, the mobile communication terminal reselects a proper new cell which for better communication or reception of signals instead of a now-serving cell away from which the terminal is moving. Such a cell reselection process of the mobile communication terminal includes a step of selecting a more proper cell and a more proper related radio access technology (RAT) based on radio wave measurements of an idle condition (standby mode) and cell reselection criterion. Specifically, in the conventional cell reselection method, the mobile communication terminal reselects a proper cell meeting the cell reselection criteria among a group of candidate cells which are near the terminal. In particular, if a mobile communication terminal, which provides General Packet Radio Service (GPRS)/Enhanced Data rate for GSM Evolution (EDGE)/Universal Mobile Telecommunications System (UMTS), etc., is now transmitting a packet data, and also if the mobile communication terminal can not receive services from the currently-serving cell, then the mobile communication terminal generally performs the cell reselection process.

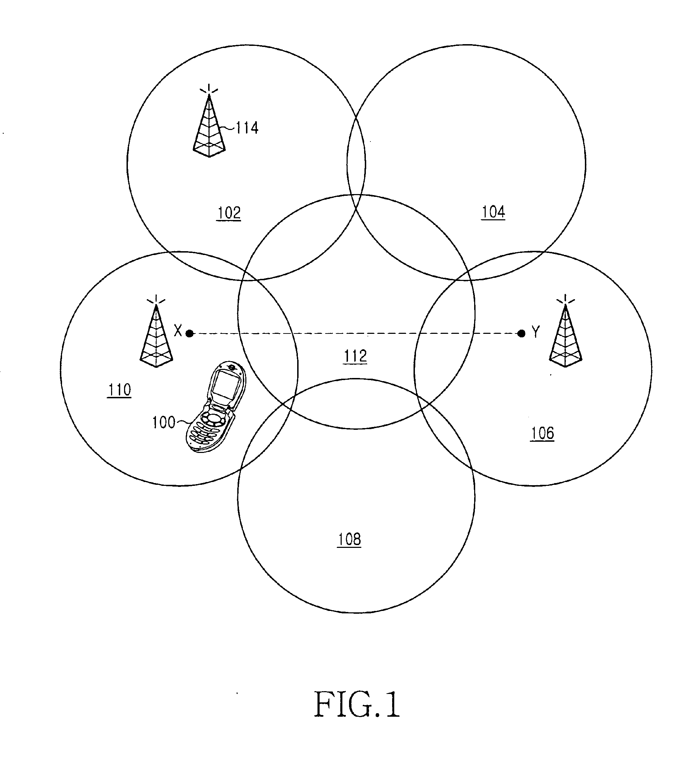

Such a cell reselection process will be described referring to FIG. 1 which is a schematic diagram illustrating the structure of a typical mobile communication system according to the prior art. FIG. 1 is an exemplary typical mobile communication system of Global System for Mobile Communication (GSM)/General Packet Radio Services (GPRS) type which includes a plurality of cells 102-112 . Each of the cells 102 -112 defines a wireless coverage areas established by corresponding stationary base stations located in the corresponding cell. For example, as shown in FIG. 1, cell 102 defines a wireless coverage area established by a base station 114 located in cell 102. Similarly, the other cells 104-112 define the coverage areas established by the corresponding base stations (not shown) located in cells 104-112, respectively.

As shown in FIG. 1, because a mobile station (hereinafter referred to as "MS") (100) moves from a mobile communication system location point X to a point Y, the MS 100 monitors signal characteristics from the base stations of cells 102-112 to select a corresponding cell through the base station related to the corresponding cell, based on a selection criterion. For example, if the signal characteristic from cell 110 indicates that cell 110 is the best selection of the optimum coverage area in light of the cell reselection criterion, then cell 110 is regarded as being a serving cell or a cell which the MS 100 receives the packet data from or transmits the packet data to.

As mentioned above, the MS continuously monitors the signal characteristics from cells 102-112. As shown in FIG. 1, as the MS 100 moves from position X to position Y, the MS 100 also moves from, for example, a coverage area related to cell 110 to a coverage area related to other cells such as cells 112 and 106. Further, when determining that another cell such as cell 112 is the optimum cell based on the signal characteristic from cell 112, the MS reselects cell 112 as being a new serving cell. Still further, when determining that still another cell such as cell 106 is the optimum cell based on the signal characteristic from cell 106, the MS 100 reselects cell 106 as being a new serving cell.

Hereinafter, the reselection process will be described in more detail. If it is assumed that the MS 100 moves from cell 110 located in position X to cell 106 located in position Y, the reselection criterion parameter C2 and cell ranking criterion parameter C32 are calculated based on transmission electrical powers of the base stations located in the cells and transmission electrical power of the MS 100. Then, the MS 100 can select a new cell to continuously receive the service based on the calculated parameter values mentioned above.

In this case, it is assumed that the receive level (RXLEV) (or receiving strength) of cell 112 is higher than that of cell 106, i.e., cell 112 is superior to cell 106 in the receive level, and that cell 102 and cell 112 are improper cells. When the MS moves from the serving cell 110 to cell 106, cell 112 would have the highest (first) priority for being reselected because of its highest RXLEV. Therefore, above all, the MS 100 receives information related to cell 112 having the first priority to determine if cell 112 is proper based on the received information. If cell 112 is determined as being improper, then the MS 100 receives another information related to cell 106 having the second priority based on the second rank of RXLEV (receiving strength or receive level) in order to determine if cell 106 is proper. If cell 106 is determined as being proper for connection, then the MS 100 performs camping to the 106.

However, if there are no distinct differences between measurement values of the cells near to the MS 100, then the MS 100 may not reselect one of those cells. Specifically, presuming that the receive level (RXLEV) is in proportion to quality of service(QoS), or the cells of similar receive level have similar levels with each other in quality of service, the cell reselection process may not be performed by the MS. Accordingly in the network, the MS often stays in or maintains only a certain cell when the receive levels or the calculated C2 and C32 values (i.e., parameter values) of the cells are similar to each other or do not exceed a predetermined threshold (or limit) for the reselection process.

However, even though the measured values of the cells are similar to each other, practically, the link quality of corresponding cells may not be similar to each other. Furthermore, even though the receive levels (RXLEV) of the cells are similar to each other, there may be often a difference of more than two times in quality of service between the cells concerned. Therefore, different MSs located even in the same area may have varying quality of service due to different cells to which the different MSs may camp. In other words, presuming that the receive level (RXLEV) is in proportion to quality of service, or the cells having similar receive levels also have similar levels with each other in quality of service, is not always correct in the cell environments in the mobile communication system.

Accordingly, if the receive levels of a broadcast control channel (BCCH) or a packet broadcast control channel (PBCCH) received from the cells are similar to each other and if the threshold values for cell reselection are also similar to each other, the possibility for reselecting a cell may be reduced significantly. Even when the quality of service in a currently-serving cell is decreasing significantly, and also even when the adjacent cells can provide relatively higher quality of service, the MS concerned may stay in the currently serving cell and be unable to receive the desired higher quality of service.

As mentioned above, conventional mobile communication systems have a problem in that the MS often stays in or maintains a currently-serving cell even though the quality of service may be deteriorating significantly, as long as the receive levels or the calculated or measured C2 and C32 values of the adjacent cells are similar to each other or do not exceed a predetermined threshold for a reselection process. Therefore, in a conventional network structure using the conventional communication service method mentioned above, frequently GPRS/EDGE/UMTS MS users have no choice but to receive bad or lower quality of service even though there are cells capable of providing higher quality of service. In other words, all the cells of the similar receive levels do not reflects the similar quality of services and the cell having a good receive level is not always the proper cell.

Accordingly, the present invention has been made to solve the above-mentioned problems occurring in the prior art.

It is the object of the present invention to provide a mobile station and a cell reselection method capable of providing better services to improve the users' convenience.

This object is solved by the subject matter of the independent claims.

Preferred embodiments are defined in the dependent claims.

In order to accomplish this object, according to one aspect of the present invention, there is provided a cell reselection method based on quality of service (QoS) in a mobile station. The method includes measuring signal characteristics of adjacent cells located near a current serving cell; checking quality of packet data traffic channel through which data are received and transmitted; searching for an adjacent cell which has a traffic channel quality similar to that of the current serving cell from among the adjacent cells, when the traffic channel quality decreases below a predetermined threshold value as a result of the checking and performing a camping to one of the searched adjacent cells.

According to another aspect of the present invention, there is a cell reselection method based on quality of service (QoS) in a mobile station. The method includes measuring periodically signal characteristics of adjacent cells located near a current serving cell; determining if differences between the measured result values are within a range of a predetermined threshold value; checking quality of packet data traffic channel through which data are received and transmitted, if the differences are within the range of predetermined threshold value; searching for an adjacent cell which has a measured value of the signal characteristics are similar to that of the current serving cell, when the traffic channel quality decreases below a predetermined threshold value as a result of the checking and performing a camping to one of the searched adjacent cells except for cells which have been previously camped for a predetermined last time period.

According to a further aspect of the present invention, there is provided a mobile station that is adapted to operate according to the above methods.

The present invention will be more apparent from the following detailed description taken in conjunction with the accompanying drawings, in which:

FIG. 1 illustrates a schematic structure of a typical mobile communication system;
FIG. 2 illustrates a block diagram of an internal structure of a mobile station according to one embodiment of the present invention;
FIG. 3 is a view explaining a cell reselection method in areas having similar receive levels according to one embodiment of the present invention;
FIG. 4 illustrates a structure of uplink parameters according to one embodiment of the present invention;
FIG. 5 illustrates a structure of downlink parameters according to one embodiment of the present invention;
FIG. 6 is a flow chart explaining a process for determining cell reselection according to one embodiment of the present invention; and
FIG. 7 is a flow chart explaining a control process for performing cell reselection based on quality of PDTCH according to one embodiment of the present invention.

Hereinafter, preferred embodiments of the present invention will be described with reference to the accompanying drawings. In the following description and drawings, the same reference numerals are used to designate the same or similar components, and a detailed description of known functions and configurations incorporated herein will be omitted when it may make the subject matter of the present invention unclear.

According to the present invention, a cell selection function for providing better quality of service (hereinafter referred to as "QoS") can be realized. For this purpose, when measurement values (for example, a receive level) from adjacent cells near a mobile station (MS) are similar to each other, the MS measures quality of a packet data traffic channel (hereinafter referred to as "PDTCH") through which data are transmitted. Then, based on the measured quality, the MS selects (or reselects) a new cell which can provide better QoS. Therefore, even when the receive levels of the adjacent cells near the MS are similar to each other, the MS can perform camping to the new cell which is capable of providing the best QoS so that the user of the MS may receive better QoS, according to the present invention.

In other words, according to one embodiment of the present invention, if the measurement values of the adjacent cells near the MS are similar to each other, the MS checks the quality of a channel (for example, PDTCH) through which data are transmitted, so that the MS may not continuously stay in or be tied to one cell. Specifically, because the conventional mobile communication systems assume that if the measurement values of the adjacent cells are similar to each other, then the QoSs of the cells are similar to each other, the conventional MS does not try to reselect a new cell even when, receiving bad or lower QoS. Conventional mobile communication systems have a tendency to place their confidences in the QoS. Accordingly, in light of this tendency, the present invention recognizes that the best QoS can be realized in the area where the cells having similar measurement values come together.

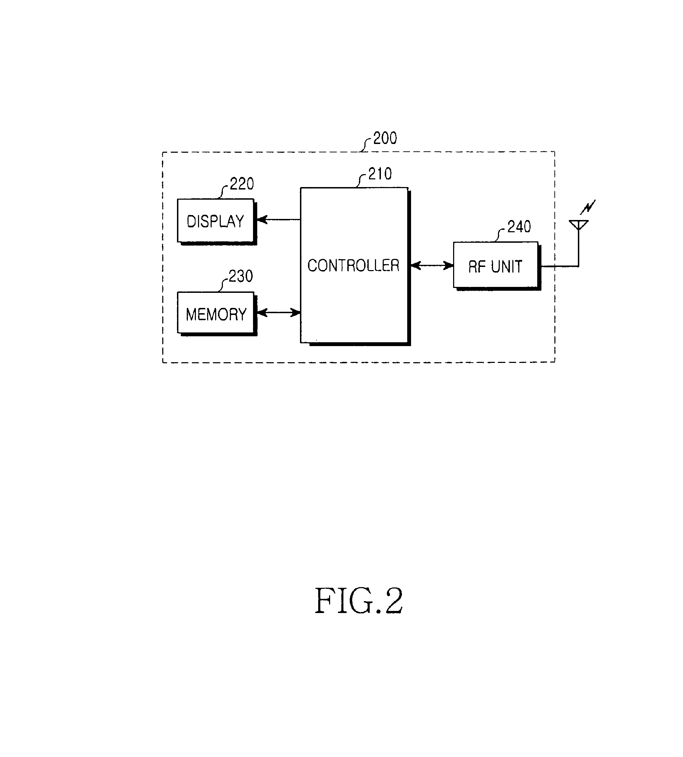

FIG. 2 illustrates an internal structure of the MS according to one embodiment of the present invention, in which the MS 200 generally includes a controller 210, a display unit 220, a memory unit 230 and an RF unit 240.

The controller 210 typically controls general operations of the MS such as call traffic, data reception/transmission, etc. Also, the controller 210 continuously monitors signal characteristics from the base stations, selects a cell which communicates with the MS via a corresponding base station, and performs camping to the selected cell in accordance with the reselection criterion. The measurement values, for example, transmission power of the base station, transmitted from the adjacent cells may change in the controller 210 even in the air because of the mobility of the controller 210 in MS 200. For this reason, it is necessary to reselect a new cell. However, when the measurement values from the adjacent cells near the MS 200 are similar to each other, the MS may not perform the cell reselection and may stay in or be fixed to a now-serving cell which continuously provides bad or lower QoS even though the adjacent other cells may provide better QoSs than that of the now-serving cell. In order to prevent this problem, the controller 210 checks the quality of PDTCH through which data is being transmitted. Accordingly, based on the checked quality of PDTCH, the controller 210 can reselect a new cell which can provide the best QoS.

The display unit 220 may receive data to be displayed corresponding to key input data input by the user, and may display operation conditions or situations of the MS and various information in the form of icons or characters in accordance with the control of the controller 210. Also, under the control of the controller 210, the display unit 220 allows the user to visually be aware of some conditions or situations, such as the user's operation or driving or the user's settings for necessary functions. Further, the display unit 220 may display the current situation of data reception/transmission, and may inform the user of a current QoS when data are received and transmitted.

The memory unit 230 connected to the controller 210 includes a read only memory (ROM) and a random access memory (RAM) for storing a plurality of programs and information necessary for controlling the operation of the MS 200, a voice memory, etc. According to one embodiment of the present invention, the memory unit 230 stores information about the cells used previously in accordance with the control of the controller 210. The information about the cells indicates the cells which have been already used during the cell reselection process performed based on the quality of PDTCH, prior to storing in the memory unit 230. Because the memory unit 230 stores the information about the cells used previously, the controller 210 does not have to repeatedly and unconditionally check and select the adjacent cells already used at latest time.

The RF unit 240 receives and transmits RF signals from and to the base station via an antenna (ANT). According to the present invention, the RF unit 240 receives and transmits communication signals including parameters from and to the network through the PDTCH during uplink or downlink.

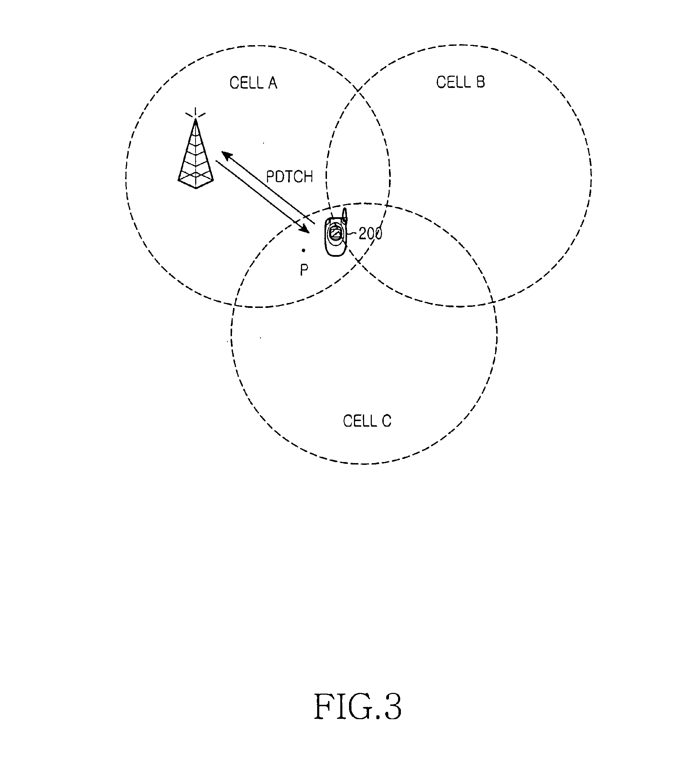

Hereinafter, a description will be made about the examples applied to the principle of the present invention, referring to FIG. 3 which explains a cell reselection method in areas having similar receive levels. In this case, it is assumed that the MS 200 is camped to cell A which has the highest receive level at the time of earlier (or the first) cell selection and is proper for selection.

Generally, as the MS 200 moves, the receive levels of cell A and the adjacent cell (i.e., cells B and C) near the MS change, accordingly. If all the cells A, B and C, however, are near or close to the MS 200, the receive levels thereof may be similar to each other because the distances between the adjacent cells and the corresponding base stations are also similar to each other. Similarly, if the differences between the receive level of cell A and the those of the adjacent cells B and C are within the range of a predetermined threshold or if the thresholds for the cell reselection are similar to each other, then the MS 200 stays now-serving cell A. Therefore, even though the MS 200 gradually moves away from cell A and eventually reaches a boundary area of cell A, such as a position P to receive data, the MS 200 does not perform the cell reselection process.

Furthermore, even when the quality of PDTCH of cell A deteriorates in quality in the boundary area where the MS is now receiving the service, the MS 200 does not perform the cell reselection process such that the MS receives bad or lower QoS from cell A. Therefore, according to the present invention, when the receive level of cell A is similar to those of the other adjacent cells, the MS 200 measures the quality of PDTCH of cell A. If the quality of the measured PDTCH becomes less than the threshold value, then the MS 200 moves to the adjacent cells of which the receive levels are similar to that of cell A mentioned above. For example, if the receive level of cell B is similar to that of cell A and the B is superior to the cell A in QoS, the MS would move to cell B (i.e., reselects cell B).

Accordingly, the MS 200 can receive relatively better QoS under an environment where the receive level of cell A is similar to those of the adjacent cells near the MS 200. In this case, the already-reselected cells can not be the targets to be reselected for a predetermined time period. In other words, after the predetermined time passes from the reselected time point, the reselected cells can be again reselected for communication with the MS.

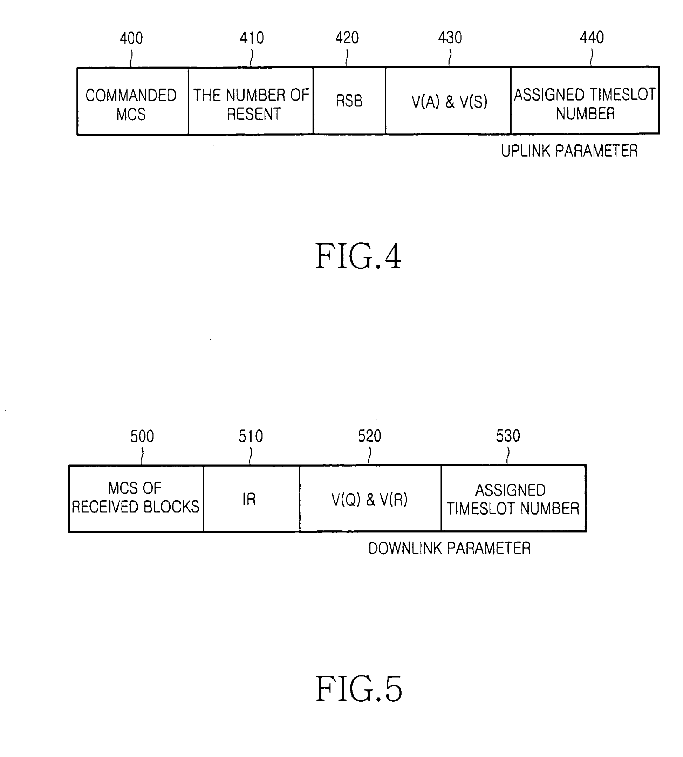

Meanwhile, there are various methods for checking the quality of the PDTCH by the MS. FIGs. 4 and 5 show structures of the parameters used for checking the quality of the PDTCH. FIG. 4 illustrates the structure of uplink parameters and FIG. 5 illustrates the structure of downlink parameters, according to one embodiment of the present invention.

The parameters shown in FIGs. 4 and 5 have predetermined values set for reflecting decrease or deterioration of quality in the uplink or the downlink connection. Even though the MS has only one of the above equations, the MS can find out the quality of each link. However, in order to check the quality more accurately, it is preferable to use more than one parameter field.

Referring to FIG. 4, the uplink parameters includes at least one field selected from a field group composed of a commanded MCS field 400, a retransmission number, and an RSB field 420, V(A) & V(S) field 430 and an assigned timeslot number field 440.

The commanded MCS field 400 includes coding scheme (CS) values or modulation and coding scheme (MCS) values which are transmitted from the network. The MS 200 checks the quality of the uplink based on the Commanded field 400 of the uplink parameters transmitted from the network. For example, the MS 200 can determine that the quality of the uplink deteriorates (or lowers) as the MCS value decreases.

When receiving the MCS value from the network, the MS 200 can obtain an index value of the uplink quality for determining a time point of the cell reselection from the following Equation (1).

$$
\begin{aligned}
&\text{if (MCS <= 4)} \\
&\qquad \text{UP\_QUALITY = UP\_QUALITY} - n\ ; \\
&\text{else if } \ \{(5 <= \text{MCS}) \quad \& \quad (\text{MCS} <=6)\} \\
&\qquad \text{UP\_QUALITY = UP\_QUALITY} + m; \\
&\text{else if (7 <=MCS)} \\
&\qquad \text{UP\_QUALITY = UP\_QUALITY} + 1. \quad \ldots\ldots\ldots\ (1)
\end{aligned}
$$

In Equation (1), the variables n, m and I are 0 or a positive integer. The MCS value is a value included in the Commanded MCS field 400. Also, the MCS values can be classified into three groups in ranges of values including the ranges of 1 to 4, 5 to 6 and 7 to 9 values. The UP_QUALITY is a variable indicating an index of the uplink quality which is a reference or criterion for determining a QoS with respect to the data which are now being transmitted. Referring to Equation (1), if the network continuously transmits the MCS whose value is less than 4, the UP_QUALITY value decreases, accordingly. If the UP_QUALITY value is less than 0, the MS 200 determines it is time to perform the cell reselection, and performs the cell reselection, accordingly.

Next, the number of re-transmitting data blocks is set to the retransmission number field (410). The retransmission number is one of the criteria for determining the uplink quality. The more frequently the MS 200 re-transmits specific blocks to the network (i.e., the more the retransmission number increases), the more the index value of the uplink quality decreases. Meanwhile, when receiving the retransmission number value from the network, the MS 200 can use the received value to obtain an index value of the uplink quality for determining the time point of the cell reselection through the following Equation (2).

$$\text{if } (N\_R\_B > N\_T)$$
$$UP\_QUALITY = UP\_QUALITY - n \; ;$$
$$\text{else}$$
$$UP\_QUALITY = UP\_QUALITY + m. \quad \ldots\ldots\ldots\ldots(2)$$

In Equation (2), variables n and m are positive integers, N_R_B is an abbreviation of "the number of retransmission of a block" which indicates the retransmission number, the variable N_T is an abbreviation of "the threshold for the uplink quality" which indicates the threshold value of the uplink quality. The MS 200 can recognize, through Equation (2), that the more UP_QUALITY value indicating the current PDTCH quality of the uplink increases, the better the QoS is, whereas the more UP_QUALITY value decreases, the worse the QoS is.

The RSB field 420 indicates a data block now being retransmitted. A ReSent Bit (RSB) is set to the RSB field 420. The uplink quality can be obtained by using the ReSent bit through the following Equation (3), because the ReSent bit is set based on the transmission number of a specific data block and is transmitted together with the specific data block;

$$\text{if } (N\_RSB\_B > N\_T)$$
$$UP\_QUALITY = UP\_QUALITY - n \; ;$$
$$\text{else}$$
$$UP\_QUALITY = UP\_QUALITY + m. \quad \ldots\ldots\ldots\ldots(3)$$

In Equation (3), variables n and m are positive integers, N_RSB_B is an abbreviation of "the number of ReSent Bit of a block" which indicates the retransmission bit number, and the variable N_T is an abbreviation of "the threshold for the uplink quality" which indicates the threshold value of the uplink quality. Like Equation (2), in Equation (3), the more UP_QUALITY value increases, the better the QoS is, whereas the more UP_QUALITY value decreases, the worse the QoS is.

Next, V (A) & V (S) field 430 includes V (A) indicating monitored values corresponding to sequence numbers of the data block of which transmission has been completed, and V (S) indicating monitored values corresponding to sequence numbers of the data block of which transmission is now being performed. The more the incremental speeds of the V (A) and the V (S) decrease, the worse the quality of the PDTCH is because the decrease of the incremental speeds of the V (A) and the V (S) means delay or interrupt of the data transmission to cause the QoS to be lowered. Specifically, the MS 200 obtains the index value of the uplink quality by applying V (A) and V (S) of the V (A) & V (S) field to following Equation (4).

$$\text{if } \; ( R \{V (A)\} < R\_VA\_T) \; \| \; ( R \{V (S)\} < R\_VS\_T)$$
$$UP\_QUALITY = UP\_QUALITY - n \; ;$$
$$\text{else}$$
$$UP\_QUALITY = UP\_QUALITY + m. \quad \ldots\ldots\ldots\ldots\ldots\ldots\ldots\ldots(4)$$

In Equation (4), variables n and m are positive integers, R {V (A)} indicates "the rate of V (A)" representing a rate for a position of the block which the counterpart of the MS should receive in next time, R {V (S)} indicates "the rate of V (S)" representing a rate of a position of the block which the MS should receive, the variable R_VA_T means "the threshold rate of V (A) for the uplink quality" which indicates the threshold value of V (A) for the uplink quality, and the variable R_VS_T means "the threshold rate of V (S) for the uplink quality" which indicates the threshold value of V (S) for the uplink quality. Therefore, through Equation (4), the MS can recognize the incremental speeds of V (A) and V (S) so that for example, when the incremental speeds increase slowly, the MS 200 may determine that the uplink quality is deteriorating.

Finally, in the assigned timeslot number field 440, the number of assigned timeslots is set. The less the time slot number is, the lower the data transmission rate becomes. Accordingly, the MS 200 can obtain the index value of the uplink quality by using the assigned timeslot numbers through the following Equation (5).

$$\text{if (TS\_U == TS\_U\_MIN)}$$
$$\text{UP\_QUALITY = UP\_QUALITY} - n;$$
$$\text{else}$$
$$\text{UP\_QUALITY = UP\_QUALITY} + m. \qquad \ldots\ldots\ldots\ldots(5)$$

In Equation (5), variables n and m are positive integers, the variable TS_U means "the number of the assigned timeslots for the uplink", and variable TS_U_MIN means "the threshold value of the timeslot number for the uplink quality".
Even though the MS utilizes only one of the above equations, the MS can obtain the index values of the uplink quality. However, in order to check the uplink quality more accurately, it is preferable to use more than one parameter field. Accordingly, if the index value of the uplink quality, which has been obtained from at least one of the above equations, is less than 0, the MS 200 performs the cell reselection process to move to a new cell providing better QoS, even though the receive level of the current serving cell is similar to those of the adjacent cells near the MS 200.
In the above embodiment of the present invention, the description was made about the cell reselection method for providing better QoS, wherein the uplink quality can be checked through the uplink parameters such that when the uplink quality decreases, the MS can perform the cell reselection process to move to a new cell providing better QoS. Similarly, the downlink quality also can be checked through the downlink parameters.
Referring to FIG. 5, the downlink parameters include at least one field selected from a field group composed of a receive block MCS field 500, an IR field 510, V(Q) & V(R) field 520 and assigned timeslot number field 530.
The receive block MCS field 500 has MCS values of blocks received from the network. The MCS values ranges from 1 to 9. Like the uplink case, the MS 200 checks and determines the quality of the downlink based on the MCS values of the blocks received during the downlink process. For this purpose, the MS 200 obtains the index values of the downlink quality through the following Equation (6). Accordingly, the MS 200 can recognize that the downlink quality has deteriorated based on the obtained index values when the MCS values decreases.

$$\text{if (MCS} <= 4)$$
$$\text{DW\_QUALITY = DW\_QUALITY} - n;$$
$$\text{else if } \{(5 <= \text{MCS}) \ \& \ (\text{MCS} <= 6)\}$$
$$\text{DW\_QUALITY = DW\_QUALITY} + m;$$
$$\text{else if (7} <= \text{MCS})$$
$$\text{DW\_QUALITY = DW\_QUALITY} + 1 \ldots\ldots\ldots\ldots(6)$$

In Equation (6), the variables n, m and I are 0 or a positive integer. The MCS value is a value included in the receive block MCS 500. Also, the MCS values can be classified into three groups in ranges of values including the ranges of 1 to 4, 5 to 6 and 7 to 9 values. The DW_QUALITY is a variable indicating an index value of the downlink quality which is a reference or criterion for determining a quality level with respect to the current PDTCH. Referring to Equation (6), if the network continuously transmits the MCS of which value is less than 4, the DW_QUALITY value continuously decreases, accordingly. If the DW_QUALITY value is less than 0, the MS 200 determines it is time to perform the cell reselection, and performs the cell reselection, accordingly.
Next, a value for indicating the incremental redundancy (IR) memory status or condition is set to the IR field 510. An IR buffer stores the retransmitted blocks, especially broken blocks transmitted from the network. Therefore, the more the broken blocks increase, the more the vacant spaces of the IR buffer decrease. Such an increase of the broken blocks means the downlink quality has deteriorated. In order to overcome this problem, the MS 200 uses the IR memory status set to the IR field 510 to obtain the index values of the downlink quality through the following Equation (7)

```
if (Status_IRM > IR_T)
        DW_QUALITY = DW_QUALITY – n;
else
        DW_QUALITY = DW_QUALITY + m.          ………………(7)
```

In Equation (7), variables n and m are positive integers, 'Status_IRM' is an abbreviation of "Status of the IR memory" which indicates the status or condition of the IR memory, the variable IR_T is an abbreviation of ""the threshold of IR memory for the downlink quality" which indicates the threshold value of the IR memory. Like the UP_QUALITY values, the more DW_QUALITY value increases, the better the downlink quality is, whereas the more DW_QUALITY value decreases, the worse the downlink quality is.

Next, V (Q) & V (R) field 520 includes V (Q) indicating the lowest block sequence number (BSN) among all the blocks transmitted from a counterpart of the MS, and V (R) indicating the highest BSN among all the blocks transmitted from the counterpart. Therefore, the more the incremental speeds of the V (Q) and the V (R) decrease, the worse the downlink quality is. Then, the MS 200 determines if the incremental speed of the V (Q) and V (R) decrease, and recognizes the downlink quality according to Equation (8):

```
if ( R {V (Q)} < R_VQ_T) ‖   ( R {V (R)} < R_VR_T)
        DW_QUALITY = DW_QUALITY – n ;




else
        DW_QUALITY = DW_QUALITY + m ……………(8)
```

In Equation (8), variables n and m are positive integers, R {V (Q)} indicates "the rate of V (Q)", R {V (R)} indicates "the rate of V (R)", the variable R_VQ_T means "the threshold rate of V (Q) for the downlink quality" which indicates the threshold value of V (Q) for the downlink quality, and the variable R_VR_T means "the threshold rate of V (R) for the downlink quality" which indicates the threshold value of V (R) for the downlink quality.

Finally, in the assigned timeslot number field 530, the number of assigned timeslots is set. The less the time slot number is, the lower the data transmission rate becomes. Accordingly, the MS 200 can obtain the index value of the downlink quality by using the assigned timeslot numbers through following Equation (9).

```
if (TS_D = = TS_D_MIN)
        DW_QUALITY = DW_QUALITY – n ;
else
        DW_QUALITY = DW_QUALITY + m.          …………….(9)
```

In Equation (9), variables n and m are positive integers, the variable TS_D means "the number of the assigned timeslots for the downlink", and variable TS_D_MIN means "the threshold value of the timeslot number for the downlink quality".

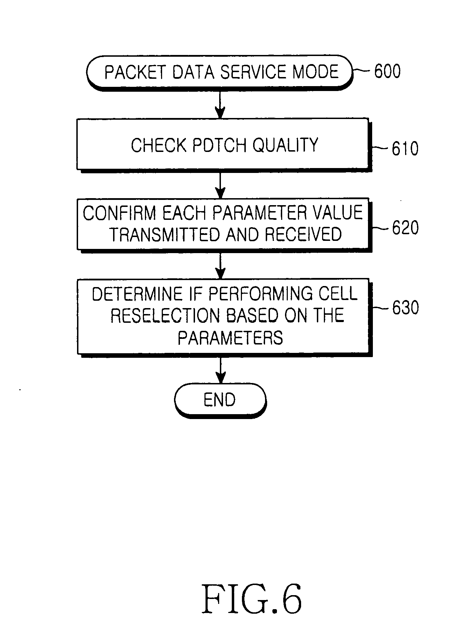

Hereinafter, referring to FIG. 6, a description will be made about a process for checking the quality of PDTCH using said parameters according to one embodiment of the present invention. FIG. 6 is a flow chart of explaining a process for determining a cell reselection.

In this case, it is assumed that the MS 200 performs a packet data service mode through which the packet data is transmitted as shown in step 600. Also it is assumed that the MS 200 measures the receive levels of the current serving cell and the adjacent cells to periodically calculate C2 and C32 values.

In step 610, the MS 200 checks the quality of PDTCH through which the current data is received or transmitted. For this operation, the present invention uses the parameters having the structures shown in FIGs. 4 and 5. Next, in step 620, the MS 200 confirms values of the parameters which are transmitted and received, accordingly. At this time, the MS 200 uses Equations 1 to 9 to confirm the parameter values. The MS 200 obtains the index values of the uplink quality or the downlink quality through the above equations to determine if the uplink quality or the downlink quality deteriorates, based on the obtained index values. Next, the process goes to step 630 wherein the MS 200 determines if the cell reselection operation will performed based on the obtained parameter values mentioned above. More specifically, if the parameter values reflect that the quality of each link has deteriorated, then the MS 200 recognizes that the quality of PDTCH of the current serving cell decreases to less than a threshold value to reselect one of the adjacent cells of which receive levels are similar to that of the current serving cell. For this operation, C2 and C32 may be used for correction values.

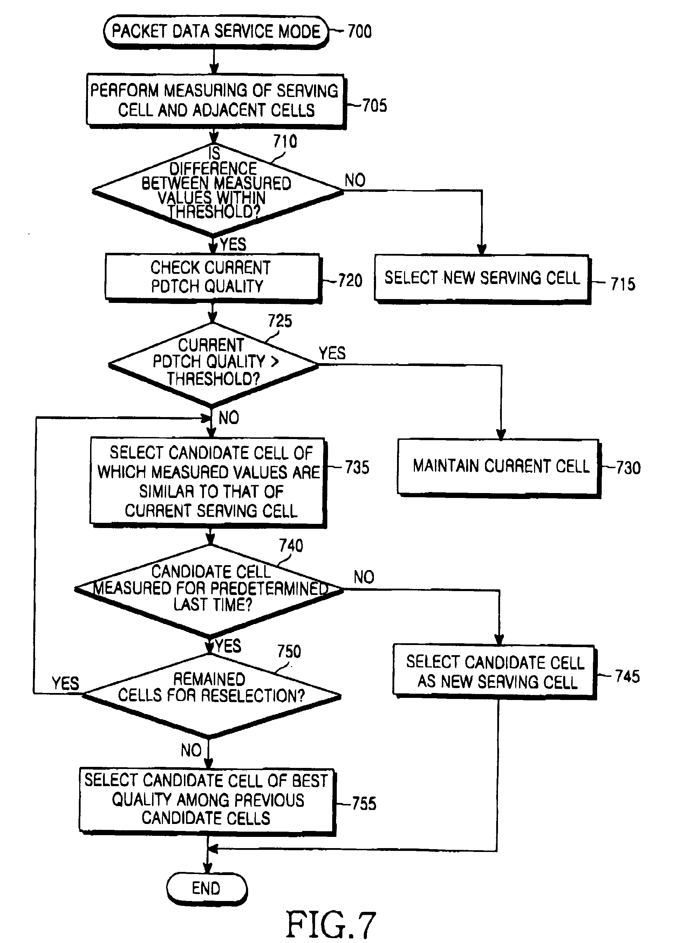

Referring to the flow chart of FIG. 7, the above operation will be described in more detail, by explaining a control process for performing a cell reselection according to one embodiment of the present invention.

Referring to FIG. 7, in step 700, the MS 200 starts the packet data service mode to receive the packet data service in a unidirectional or bi-directional way Next, in step 705, the MS 200, which is now receiving the data service, periodically measures the characteristic signals from the current serving cell and the adjacent cells. Next, the process goes to step 710 wherein the MS 200 determines if the difference between the measured values of the current serving cell and the adjacent cells exceed the predetermined threshold value. If the difference exceed the threshold value, then the process goes to step 715 wherein the MS 200 tries to reselect one of the adjacent cells of which measured values are different from that the current serving cell and the differences exceed the predetermined threshold value.

Contrary to this, in step 710, if the difference between the measured values is within the threshold value, or if the measured values of the current serving cell and the adjacent cells are similar to each other, then the process goes to step 720 wherein the MS 200 periodically checks the quality of the PDTCH. Specifically, the MS 200 periodically checks the uplink or the downlink parameters through which the quality of the PDTCH can be checked or determined. Consequently, the MS 200 can calculate a standard value indicating the quality of the packet data traffic channel based on the parameters collected by the periodic checking.

In order to calculate such a standard value, the MS 200 uses at least one of the fields constituting the uplink and the downlink parameters, to check the quality of the PDTCH. Accordingly, the process goes to step 725 wherein the MS determines if the quality of PDTCH, which has been checked through each of the field values, decreases to less than the predetermined threshold value. If the quality of PDTCH is more than the threshold value, then the process goes to step 730 wherein the MS 200 still maintains the current serving cell.

If the quality of PDTCH, however, is less than the threshold value, then the process goes to step 735 wherein the MS 200 selects a candidate cell whose measured values are similar to that of the current serving cell. Specifically, the MS 200 finds the cell group whose receive levels C2 and C32 values are similar to that of the current serving cell, and selects the candidate cell which has the best measured values among all the found cells. Next, in step 740, the MS 200 determines if the selected a candidate cell was already selected predetermined time before in order to determine if the selected cell has been already used during the quality-based cell reselection process. If the selected candidate cell has not been selected yet, then the MS 200 proceeds to step 745 and sets the selected candidate cell as a new serving cell, thereby completing the cell reselection process.

In contrast, if the candidate cell was already selected during the predetermined last time, then the process goes to step 750 wherein the MS 200 determines if there are still remaining candidate cells to be reselected. In other words, the MS 200 determines if there are still remaining candidate cells of which measured values are similar to that of the current serving cell.

If there are still remaining other candidate cells, the process goes to step 735 wherein the MS 200 repeatedly performs the necessary operations, that is, for example, the MS 200 again selects a candidate cell which has the best measured values among all the remaining candidate cells. To the contrary, if there is no remaining candidate cell, then the process goes to step 755 wherein the MS 200 selects a cell having the best quality of PDTCH, among all the candidate cells which have been already previously found. At this time, the MS 200 holds the selected new cell for a certain time period. Also, the MS 200 can again perform the cell reselection process after the certain time period passes, according to one embodiment of the present invention. Further, the MS 200 may perform the cell reselection process for the certain time period based on the receive levels C2 and C32, according another embodiment of the present invention.

As mentioned above, giving consequence to the better quality of service, the present invention can stably provide the high level services that users demand, based on the most proper cell which the MS determines and selects. Further, because the mobile station or mobile communication terminal of the present invention can stay in or hold on the cell of the best quality of data in an area where the receive levels of the adjacent cells are similar to each other, the present invention has an advantage in that the best service can be provided to the users having, for example, GPRS/EDGE/UMTS mobile terminals or mobile stations under the current cell environment

While the invention has been shown and described with reference to certain preferred embodiments thereof, various changes in forms and details may be made within the scope of the present invention. As mentioned above, in the sequence of the cell reselection process according to the above embodiments of the present invention, the MS first measures the signal characteristics of the current serving cell and the adjacent cells. Next, if the measured values of the signal characteristics from the cells are all similar to each other, then the MS secondly checks the quality of PDTCH. However, according to a modified embodiment of the present invention, the process sequence may be changed. For example, the MS may first periodically measure the quality of PDTCH in the current serving cell. Next, if the QoS becomes deteriorated, then the MS may use the measured values of the current serving cell and the adjacent cells to perform the cell reselection process. Accordingly, the scope of the present invention should not be limited to the embodiments described in the specification but to the appended claims.

**Claims**

1.  A cell reselection method based on quality of service in a mobile station, the method comprising the steps of:

    measuring signal characteristics of adjacent cells located near a current serving cell;
    determining quality of packet data traffic channel through which data are received and transmitted;
    searching for an adjacent cell which has a traffic channel quality similar to that of the current serving cell from among the adjacent cells, when the traffic channel quality decreases below a predetermined threshold value as a result of the determination; and
    performing a camping to one of the searched adjacent cells.

2.  The method as claimed in claim 1, wherein the step of performing the camping to one of the adjacent cells includes:

    selecting one candidate cell among the searched adjacent cells;
    determining if the selected candidate cell has been camped on for a predetermined last time period;
    searching for other remaining cells, if the selected candidate cell has been camped on for the predetermined last time period as a result of the determination; and
    selecting a new candidate cell which is a new serving cell, among the remaining cells excluding the selected candidate cell which has been previously camped an for the predetermined last time period, and performing camping to the newly selected serving cell.

3.  The method as claimed in claim 2, wherein the method further comprises the step of performing, for a certain time period, camping to a cell having the best quality of the packet data traffic channel among the cells which were previously searched prior to the step of searching for, if there is no other remaining cell in the step of searching for other remaining cells.

4.  The method as claimed in one of claims 1 to 3, wherein the step of measuring signal characteristics includes:

    measuring transmission powers of base stations of the adjacent cells and a transmission power of the mobile station; and
    calculating a measured result value with respect to each cell based on the measured transmission powers.

5.  The method as claimed in one of claims 1 to 3, wherein the step of measuring signal characteristics includes:

    measuring receive levels from all the adjacent cells near a position where the mobile station is registered.

6.  The method as claimed in claim 4 or 5, wherein the measured result values includes at least one of the measured receive level, a reselection criterion parameter value and a cell ranking criterion parameter value.

7.  The method as claimed in one of claims 1 to 6, wherein the step of determining quality of packet data traffic channel includes:

    checking an uplink quality and a downlink quality by using uplink parameters and downlink parameters derived from the received and transmitted data.

8.  The method as claimed in claim 7, wherein the uplink parameters includes at least one field for indicating one value of a coding scheme and a commanded modulation and coding scheme transmitted from corresponding base stations, a field for indicating a retransmission number of specific blocks which are transmitted to the base station, a field for setting up a resent bit indicating a resent data block, a field for indicating V (S) values which indicate a position of a block that a counterpart of the mobile station receives, and a V (A) values which indicate a position of a next block that the mobile station receives, and a field for indicating an assigned timeslot number.

**9.** The method as claimed in claim 7, wherein the downlink parameters include at least one field for indicating modulation and coding scheme values received from corresponding base stations, a field for indicating incremental redundancy memory status, a field for setting up a resent bit indicating a resent data block, a field for indicating V (Q) values which indicate the lowest block sequence number (lowest BSN) which is the lowest bit among all the blocks transmitted from a counterpart of the mobile station, and a V (R) values which indicate the highest block sequence (highest BSN) which is the highest bit among all the blocks transmitted from the counterpart of the mobile station, and a field for indicating an assigned timeslot number.

**10.** The method as claimed in claim 8, wherein the quality of the packet data traffic channel is determined based on an index value of uplink quality obtained by using at least one of the fields which constitute the uplink parameters.

**11.** The method as claimed in claim 9, wherein the quality of the packet data traffic channel is determined based on an index value of downlink quality obtained by using at least one of the fields which constitute the downlink parameters.

**12.** A cell reselection method based on quality of service in the mobile station, the method comprising the steps of:

> periodically measuring signal characteristics of adjacent cells located near a current serving cell;
> determining if differences between the measured result values are within a range of a predetermined threshold value;
> determining quality of packet data traffic channel through which data are received and transmitted, if the differences are within the range of the predetermined threshold value;
> searching for an adjacent cell which has a measured value of signal characteristics similar to that of the current serving cell, when the traffic channel quality decreases below a predetermined threshold value as a result of the determination; and
> performing a camping to one of the searched adjacent cells except for cells which have been previously camped on for a predetermined last time period.

**13.** The method as claimed in claim 12, wherein the step of determining quality of the packet data traffic channel includes:

> periodically receiving uplink parameters and downlink parameters through which the quality of the packet data traffic channel can be checked;
> calculating standard values for indicating the quality of the packet data traffic channel based on the parameters periodically received and collected; and
> comparing the standard values with the threshold values.

**14.** The method as claimed in claim 12, further comprising performing, for a certain time period, camping to a cell having the best quality of the packet data traffic channel among the cells which were previously searched prior to the searching step, if there are no adjacent cells of which measured values are similar to that of the current serving cell.

**15.** A mobile station adapted to operate according to one of claims 1 to 14.

FIG.1

FIG.2

CELL A

CELL B

PDTCH

200

P

CELL C

FIG.3

| 400 | 410 | 420 | 430 | 440 |
|---|---|---|---|---|
| COMMANDED MCS | THE NUMBER OF RESENT | RSB | V(A) & V(S) | ASSIGNED TIMESLOT NUMBER |

UPLINK PARAMETER

# FIG.4

| 500 | 510 | 520 | 530 |
|---|---|---|---|
| MCS OF RECEIVED BLOCKS | IR | V(Q) & V(R) | ASSIGNED TIMESLOT NUMBER |

DOWNLINK PARAMETER

# FIG.5

PACKET DATA SERVICE MODE —600

↓

CHECK PDTCH QUALITY —610

↓

CONFIRM EACH PARAMETER VALUE
TRANSMITTED AND RECEIVED —620

↓

DETERMINE IF PERFORMING CELL
RESELECTION BASED ON THE
PARAMETERS —630

↓

END

# FIG.6

PACKET DATA SERVICE MODE — 700

PERFORM MEASURING OF SERVING CELL AND ADJACENT CELLS — 705

710
IS DIFFERENCE BETWEEN MEASURED VALUES WITHIN THRESHOLD?

NO → SELECT NEW SERVING CELL — 715

YES

CHECK CURRENT PDTCH QUALITY — 720

725
CURRENT PDTCH QUALITY > THRESHOLD?

YES → MAINTAIN CURRENT CELL — 730

NO

SELECT CANDIDATE CELL OF WHICH MEASURED VALUES ARE SIMILAR TO THAT OF CURRENT SERVING CELL — 735

740
CANDIDATE CELL MEASURED FOR PREDETERMINED LAST TIME?

NO → SELECT CANDIDATE CELL AS NEW SERVING CELL — 745

YES

750
REMAINED CELLS FOR RESELECTION?

YES

NO

SELECT CANDIDATE CELL OF BEST QUALITY AMONG PREVIOUS CANDIDATE CELLS — 755

END

FIG.7